(19) Europäisches Patentamt
European Patent Office
Office européen des brevets

(11) **EP 3 607 776 B1**

(12) **FASCICULE DE BREVET EUROPÉEN**

(45) Date de publication et mention
de la délivrance du brevet:
**21.04.2021 Bulletin 2021/16**

(21) Numéro de dépôt: **18727856.9**

(22) Date de dépôt: **03.05.2018**

(51) Int Cl.:
*H04W 36/36* (2009.01)    *H04W 36/32* (2009.01)
*G01S 1/80* (2006.01)    *H04W 84/20* (2009.01)

(86) Numéro de dépôt international:
**PCT/FR2018/051097**

(87) Numéro de publication internationale:
**WO 2018/203001 (08.11.2018 Gazette 2018/45)**

(54) **MÉTHODE DE HANDOVER POUR ÉTIQUETTE DANS UN RÉSEAU DE CAPTEURS SANS FIL**

ÜBERGABEVERFAHREN FÜR EIN ETIKETT IN EINEM DRAHTLOSEN SENSORNETZWERK

HANDOVER METHOD FOR A TAG IN A WIRELESS SENSOR NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.05.2017 FR 1753993**

(43) Date de publication de la demande:
**12.02.2020 Bulletin 2020/07**

(73) Titulaire: **MAPLE HIGH TECH**
**31100 Toulouse (FR)**

(72) Inventeurs:
• **BEGOC, William**
**31100 Toulouse (FR)**
• **TANCEREL, Ludovic**
**31200 Toulouse (FR)**

(74) Mandataire: **Brevalex**
**56, Boulevard de l'Embouchure**
**B.P. 27519**
**31075 Toulouse Cedex 2 (FR)**

(56) Documents cités:
**US-A- 5 924 034**

• **YAZDI EHSAN TABATABAEI ET AL: "Study of target tracking and handover in Mobile Wireless Sensor Network", THE INTERNATIONAL CONFERENCE ON INFORMATION NETWORKING 2014 (ICOIN2014), IEEE, 10 février 2014 (2014-02-10), pages 120-125, XP032586959, DOI: 10.1109/ICOIN.2014.6799677**
• **802 15 4 MAINENANCE SC (802 15): "802.15.4 Applications ; 15-14-0226-00-0000-802-15-4-applications", IEEE DRAFT; 15-14-0226-00-0000-802-15-4-APPLICATIONS, IEEE-SA MENTOR, PISCATAWAY, NJ USA, vol. 802.15, 14 mai 2014 (2014-05-14), pages 1-80, XP068069771,**
• **QIAN DONG ET AL: "Performance analysis of a handover mechanism for a mobile wireless sensor network", CONSUMER COMMUNICATIONS AND NETWORKING CONFERENCE (CCNC), 2013 IEEE, IEEE, 11 janvier 2013 (2013-01-11), pages 645-648, XP032349996, DOI: 10.1109/CCNC.2013.6488517 ISBN: 978-1-4673-3131-9**

**EP 3 607 776 B1**

## Description

### DOMAINE TECHNIQUE

La présente invention concerne de manière générale un réseau de capteurs sans fil ou WSN *(Wireless Sensor Network)* et plus particulièrement un réseau utilisant une transmission UWB *(Ultra Wide Band).*

### ÉTAT DE LA TECHNIQUE ANTÉRIEURE

Les réseaux de capteurs sans fil ou WSN *(Wireless Sensor Networks)* sont bien connus de l'état de la technique.

On rappelle qu'un réseau WSN est un réseau sans fil comportant généralement un grand nombre de nœuds capables d'effectuer des mesures et de les transmettre de manière autonome. La position des nœuds, encore dénommés quelquefois points d'accès (APs), dans un tel réseau n'est pas nécessairement connue. Lorsqu'un nœud du réseau connaît sa position, celui-ci est dénommé « nœud-ancre » *(anchor node)* ou simplement ancre *(anchor).*

Une catégorie importante de réseau WSN est constituée par les réseaux conformes au standard IEEE 802.15.4 et plus particulièrement par ceux opérant selon le mode balise *(beacon)* de standard. Dans un tel mode, les ancres du réseau comprennent d'une part des ancres coordinatrices capables d'émettre des signaux de balise, plus simplement dénommés balises, et des ancres subordonnées capables de recevoir ces balises pour se synchroniser avec les ancres coordinatrices. Les ancres coordinatrices sont elles-mêmes synchronisées avec une ancre coordinatrice primaire encore appelée nœud de référence du réseau. Les balises émises par une ancre coordinatrice se succèdent avec une période BI *(Beacon Interval),* l'intervalle entre deux balises successives définissant une supertrame *(superframe).*

Les balises émises par les ancres coordinatrices permettent à une étiquette de se synchroniser avec le réseau. Lorsqu'une étiquette ne reçoit pas ou plus de signal de balise pendant un nombre prédéterminé de périodes BI consécutives, celle-ci diffuse des notifications d'état orphelin *(orphan notification),* autrement dit des requêtes d'association au réseau. Ainsi, si l'étiquette sort de la zone de couverture d'une première ancre coordinatrice avec laquelle elle était associée, pour entrer dans la zone de couverture d'une seconde ancre coordinatrice, l'étiquette émet des notifications d'état orphelin jusqu'à ce qu'elle reçoive le signal de balise de la seconde ancre coordinatrice. L'étiquette cesse alors aussitôt de transmettre ces notifications d'état orphelin, se synchronise avec ce nouveau signal de balise et émet une demande d'association (message unicast) à la seconde ancre coordinatrice. La seconde ancre coordinatrice répond alors à cette demande d'association par un message de confirmation et informe le nœud de référence de cette nouvelle association.

Le processus de dissociation et de nouvelle association avec une ancre coordinatrice du réseau, autrement dit le processus de handover dans le réseau WSN, n'est pas optimal pour plusieurs raisons.

Tout d'abord, le handover entraîne une interruption de la communication puisque l'étiquette n'envoie des messages d'état orphelin qu'après que la liaison avec l'ancre coordinatrice avec laquelle elle était associée ait été rompue. Une solution relativement simple pour éviter cette interruption serait d'écouter en permanence l'ensemble des balises pour anticiper la rupture de liaison. Cette mesure serait toutefois très consommatrice en énergie.

Ensuite, lorsqu'après dissociation, l'étiquette se trouve dans la zone de couverture de plusieurs ancres coordinatrices, la sélection de l'ancre coordinatrice pour requérir une nouvelle association est arbitraire dans la mesure où elle correspond à celle dont le signal de balise est détecté le premier par l'étiquette.

Enfin, les interruptions de communication et le choix non optimal des ancres coordinatrices lors des opérations de handover conduisent à une multiplication des messages et donc à une consommation d'énergie importante, en particulier lorsque l'étiquette se déplace dans la zone où le réseau est déployé. Les ressources en énergie d'une étiquette étant particulièrement réduites, l'autonomie de fonctionnement en est réduite d'autant.

Le document "Study of target tracking and handover in Mobile Wireless Sensor Network", publié dans la conférence ICOIN2014, IEEE, le 10-02-2014, parYazdi Ehsan Tabatabaei et Al, décrit une méthode de handover qui prend en compte la distance entre l'étiquette et l'ancre coordinatrice (qui est la seul ancre) de la cellule.

Le but de la présente invention est de proposer une méthode de handover pour une étiquette dans un réseau de capteurs sans fil qui ne génère pas d'interruptions de communication entre l'étiquette et le réseau et qui soit moins consommatrice en énergie que celle connue de l'état de la technique.

### EXPOSÉ DE L'INVENTION

La présente invention est définie par la méthode de handover pour une étiquette dans un réseau de capteurs sans fil ayant une structure cellulaire, chaque cellule du réseau comprenant une pluralité d'ancres dont une ancre coordinatrice et au moins une ancre subordonnée, les ancres subordonnées d'une cellule étant synchronisées avec l'ancre coordinatrice de cette cellule, l'étiquette étant en outre synchronisée avec une première ancre coordinatrice ($A_i$) d'une première cellule ($C_i$) au moyen d'un premier signal de balise, la méthode comprenant les étapes suivantes :

(a) on détermine à partir des distances qui la séparent des ancres de la première cellule si l'étiquette se situe dans une zone de couverture ($Z_i$) de cette première cellule et, dans la négative,

(b) l'étiquette scrute les signaux de balise des cellules adjacentes à la première cellule et identifie (540) parmi eux un second signal de balise dont la puissance est la plus élevée, le second signal de balise étant émis par une seconde ancre coordinatrice ($A_{i'}$);

(c) l'étiquette teste si la seconde cellule satisfait à un critère de sélection en comparant la puissance ($\rho_{i'}$) du second signal de balise avec la puissance ($\rho_i$) du premier signal de balise et, dans l'affirmative, s'associe avec la seconde balise et se dissocie de la première balise.

Avantageusement, la zone de couverture ($Z_i$) de la première cellule est constituée par un ensemble de zones de couverture élémentaires ($Z_{ik}$), chaque zone de couverture élémentaire étant associée à un sous-ensemble d'ancres ($\sigma_{ik}$) de la première cellule, l'étiquette se trouvant dans la zone de couverture de la première cellule si pour au moins une desdites zones élémentaires la somme ($D_{ik}$) des distances de l'étiquette aux ancres de cette zone élémentaire est inférieure à une valeur de seuil prédéterminée ($\Delta_{ik}$).

Le distances de l'étiquette aux ancres de la première cellule sont avantageusement obtenues sur la base des temps de propagation aller-retour d'un message transmis par l'étiquette et renvoyé par les ancres de la première cellule, l'étiquette effectuant la somme des distances ainsi obtenues.

Ladite valeur de seuil prédéterminée peut être transmise par l'ancre coordinatrice à l'étiquette.

Ladite valeur de seuil prédéterminée peut être comprise dans le premier signal de balise.

De préférence, la position de l'étiquette est déterminée par l'ancre coordinatrice de la première cellule sur la base des différences de temps d'arrivée d'un message émis par l'étiquette et reçu par les ancres de la première cellule, l'ancre coordinatrice de la première cellule en déduisant la somme des distances séparant ladite étiquette des ancres de chaque zone élémentaire.

Pour ce faire, l'ancre coordinatrice détermine si la somme des distances est supérieure à la valeur de seuil prédéterminée et, dans l'affirmative en avertit l'étiquette.

Dans tous les cas, l'accès au réseau peut être organisé sous forme de supertrames communes à l'ensemble du réseau, chaque supertrame contenant un intervalle réservé à la transmission de balises par les ancres coordinatrices, l'étiquette détecte à l'étape (b), au sein dudit intervalle, les signaux de balise de cellules adjacentes sur une pluralité de supertrames successives et détermine le second signal de balise de puissance la plus élevée en effectuant une moyenne sur ladite pluralité de supertrames successives.

Le critère de sélection à l'étape (c) s'exprime sous la forme $\rho_{i'} > \rho_i + \varepsilon_{ii'}$ où $\rho_i$ est la puissance du premier signal de balise, $\rho_{i'}$ est la puissance du second signal de balise et $\varepsilon_{ii'}$ est une valeur de seuil de puissance prédéterminée, positive, négative ou nulle.

Dans un mode de réalisation typique, le réseau est conforme au standard IEEE 802.15.4a.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1 représente schématiquement un exemple de réseau de capteurs auquel peut s'appliquer la méthode de handover selon un mode de réalisation de l'invention ;
Les Figs. 2A, 2B, 2C, 2D représentent schématiquement un premier, un deuxième, un troisième et un quatrième exemple d'une zone de couverture élémentaire au sein d'une cellule du réseau de capteurs ;
La Fig. 3 représente de manière schématique une cellule dont la zone de couverture est composée d'une pluralité de zones de couverture élémentaires ;
La Fig. 4 illustre un exemple de situation de handover entre deux cellules adjacentes;
La Fig. 5 représente de manière schématique un ordinogramme de la méthode de handover selon un mode de réalisation de l'invention.

## EXPOSÉ DÉTAILLÉ DE MODES DE RÉALISATION PARTICULIERS

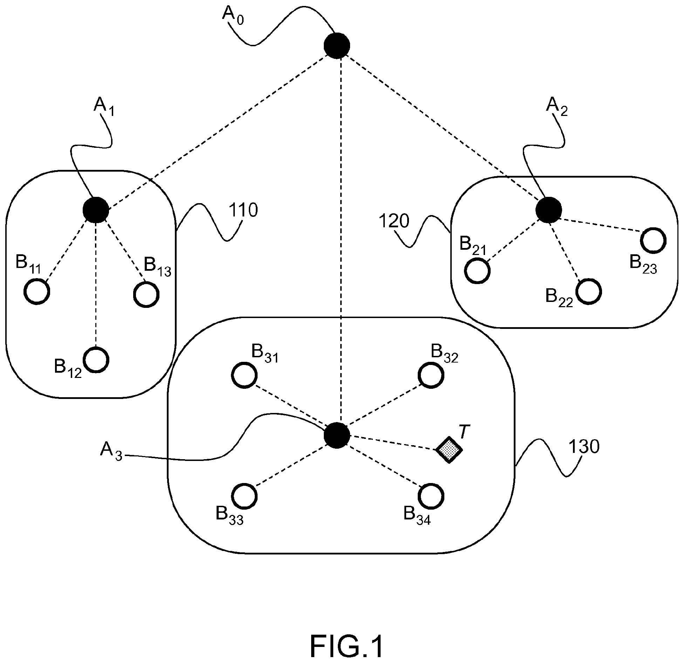

On considérera dans la suite un réseau de capteurs sans fil (WSN) présentant une architecture cellulaire, dont un exemple est représenté schématiquement en Fig. 1. Ce réseau est divisé en cellules, chaque cellule comportant au moins une ancre coordinatrice. De manière préférentielle, chaque cellule comprend une ancre coordinatrice et une pluralité d'ancres subordonnées capables de se synchroniser par rapport à cette ancre coordinatrice.

On rappelle que les positions des nœuds-ancres (ancres coordinatrices et ancres subordonnées) sont déterminées et connues. Les ancres coordinatrices sont organisées de manière arborescente, chaque ancre coordinatrice étant responsable de la synchronisation d'un sous-ensemble de nœud-ancres et l'ancre coordinatrice à la racine de l'arbre est l'ancre de référence pour l'ensemble du réseau.

On a représenté en Fig. 1, un réseau comprenant quatre ancres coordinatrices $A_0, A_1, A_2, A_3$, l'ancre $A_0$ étant l'ancre de référence, les ancres $A_1, A_2, A_3$ étant les ancres servant respectivement les cellules 110, 120 et 130. Les ancres coordinatrices se synchronisent par rapport à l'ancre de référence $A_0$. La cellule 110 comprend en outre trois ancres subordonnées notées $B_{11}, B_{12}, B_{13}$, se synchronisant par rapport à l'ancre coordinatrice $A_1$, la cellule 120 comprend de même trois ancres subordonnées notées $B_{21}, B_{22}, B_{23}$, se synchronisant par rapport à l'ancre coordinatrice $A_2$ et la cellule 130 comprend quatre ancres subordonnées notées $B_{31}, B_{32}, B_{33}, B_{34}$, se synchronisant par rapport à l'ancre coordinatrice $A_3$. On a supposé dans l'exemple illustré que les ancres étaient disposées dans un plan mais il est bien entendu que les ancres sont en général disposées dans un espace tridimensionnel.

L'étiquette T est située dans la cellule 130 et par conséquent son ancre de rattachement, autrement dit l'ancre du réseau avec laquelle elle s'est synchronisée est l'ancre coordinatrice $A_3$.

On supposera dans la suite, sans perte de généralité, que le réseau WSN est conforme au standard IEEE 802.15.4a et, en particulier, que la couche physique met en œuvre une transmission UWB *(Ultra Wide Band)*. Cette technologie à très large bande et par conséquent à très haute résolution temporelle se prête bien aux applications de localisation. Il est ainsi possible de déterminer la position d'une étiquette à partir d'un signal UWB émis par cette dernière. Le calcul de position peut être effectué par l'étiquette sur la base des temps d'aller-retour ou TWR *(Two Way Ranging)* entre un signal émis par le tag et renvoyé respectivement par les différents nœuds-ancres. Alternativement, le calcul de position peut être effectué par les nœuds-ancres voire par un serveur distant, sur la base des temps d'arrivée voire sur la base des différences de temps d'arrivée ou TDOA *(Time Difference Of Arrival)* d'un signal UWB émis par cette étiquette et reçu par les différents nœuds-ancres.

Le principe à la base de l'invention est de mettre à profit la capacité de localisation de l'étiquette pour anticiper la procédure de handover en déterminant, avant toute dissociation avec l'ancre coordinatrice, quand elle va sortir de la cellule courante et quelle cellule adjacente elle s'apprête à rejoindre.

La procédure de handover met en œuvre un critère de localisation de l'étiquette par rapport aux ancres de la cellule à laquelle elle est associée. Le critère de localisation fait appel aux distances entre l'étiquette et les ancres de la cellule en question.

Chaque cellule est caractérisée par sa zone de couverture. De manière générale la zone de couverture d'une cellule i comprenant une ancre coordinatrice $A_i$ et un ensemble de $N_i$ -1 ancres subordonnées, $B_{i,j}$, $j$=1,..., $N_i$ -1 est constituée par la réunion de zones de couverture élémentaires, $Z_{ik}$, $k$=1,...,$K$, où $K \geq 1$, chaque zone de couverture élémentaire $Z_{ik}$ étant associée à un sous-ensemble $\sigma_{ik}$ de l'ensemble $S_i$ des ancres de la cellule, à savoir $S_i$ = $\{A_i, B_{i,1}, .. B_{i,Ni-1}\}$. Autrement dit, $Z_i = \bigcup_{k=1}^{K} Z_{ik}$. Il convient de remarquer que les sous-ensembles $\sigma_{ik}$ d'une cellule ne sont pas nécessairement disjoints. En particulier, l'ancre coordinatrice peut faire partie de plusieurs ou de tous les sous-ensembles $\sigma_{ik}$ de la cellule $C_i$.

Si l'on note $X_{ik\ell}$, $\ell$=1...,$L_{ik}$ les ancres appartenant au sous-ensemble $\sigma_{ik}$. La zone de couverture élémentaire $Z_{ik}$ est définie par l'ensemble de points M tels que :

$$D_{ik}(M) \leq \Delta_{ik} \qquad (1)$$

avec :

$$D_{ik}(M) = \sum_{\ell=1}^{L_{ik}} \|MX_{ik\ell}\| \qquad (2)$$

où $\|MX_{ik\ell}\|$ désigne la distance entre les points X et $X_{ik\ell}$ et $\Delta_{ik}$ est un seuil prédéterminé caractéristique de la zone élémentaire $Z_{ik}$ en question. Cette distance est de préférence une distance euclidienne mais peut être de manière plus générale une distance de Minkowski d'ordre $p$ avec $p \geq 22$.

Ainsi, selon le critère de localisation, on dira que l'étiquette T est située dans la zone de couverture $Z_i$ de la cellule $C_i$ si et seulement si :

$$\exists k \in \{1,...,K\} \text{ tel que } D_{ik}(T) \leq \Delta_{ik} \qquad (3)$$

Le seuil $\Delta_{ik}$ peut être choisi par exemple tel que $\Delta_{ik} = \delta_{ik}$, avec $\delta_{ik} = \max\limits_{X_{ik\ell} \in \sigma_{ik}} \left( \sum\limits_{\ell'=1}^{L_{ik}} \left\| X_{ik\ell} X_{ik\ell'} \right\| \right)$ auquel cas la zone $Z_{ik}$ contient l'ensemble des ancres $X_{ik\ell}$, $\ell = 1,...,L_{ik}$. De manière générale cependant, le seuil $\Delta_{ik}$ pourra être choisi supérieur ou inférieur à $\delta_{ik}$. En particulier, on pourra choisir le seuil $\Delta_{ik}$ sensiblement inférieur à $\delta_{ik}$ auquel cas la zone de couverture de la zone élémentaire ne contiendra pas les ancres $X_{ik\ell}$, $\ell = 1,...,L_{ik}$.

Lorsque le critère de localisation est mis en œuvre par l'étiquette, la valeur (ou les valeurs) de seuil $\Delta_{ik}$ sont transmises par l'ancre coordinatrice $A_i$ à l'étiquette. Selon un exemple particulier d'implémentation, la valeur de seuil sera transmise par le signal de balise émis par l'ancre coordinatrice $A_i$.

Dans tous les cas, le critère de localisation est particulièrement simple dans la mesure où il ne nécessite pas de déterminer la position précise de l'étiquette.

On décrit dans la suite plusieurs exemples de zones de couverture élémentaires.

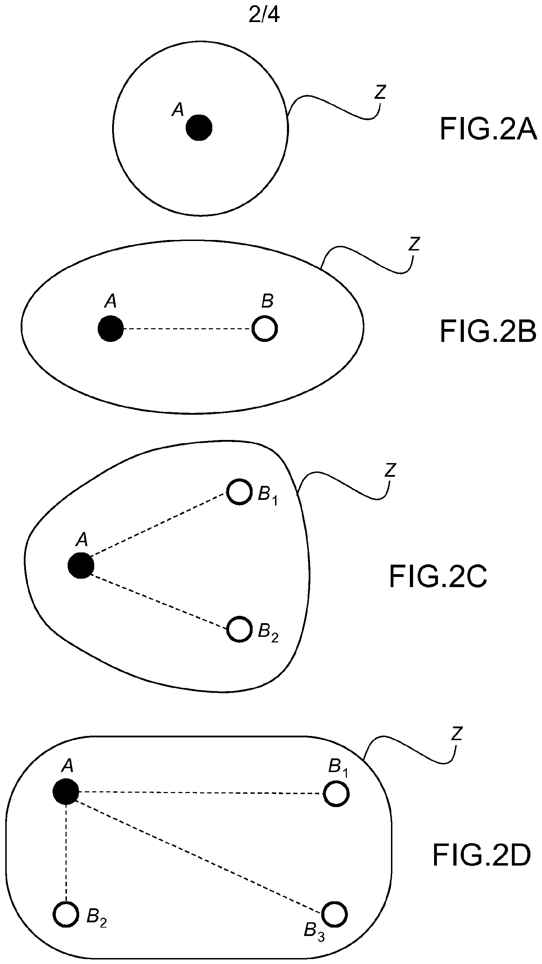

La Fig. 2A représente le cas le plus simple d'une zone de couverture élémentaire ne comprenant qu'une ancre coordinatrice et aucune ancre subordonnée. La zone de couverture élémentaire est délimitée par un cercle (une sphère dans l'espace) centré(e) sur l'ancre coordinatrice en question.

La Fig. 2B représente schématiquement un deuxième exemple de zone de couverture élémentaire au sein d'une cellule du réseau. Dans cet exemple, la zone de couverture élémentaire comprend une ancre coordinatrice A et une ancre subordonnée B.

Dans le cas où $\Delta > \delta = \|AB\|$, on comprend que la zone de couverture élémentaire est géométriquement définie par une ellipse (dans le plan) ou un ellipsoïde (dans l'espace) dont les foyers sont les ancres A et B.

La Fig. 2C représente schématiquement un troisième exemple de zone de couverture élémentaire au sein d'une cellule du réseau. Dans cet exemple, la zone élémentaire de couverture comprend une ancre coordinatrice A et deux ancres subordonnées $B_1$ et $B_2$.

Dans le cas où $\Delta > \delta$, la zone de couverture élémentaire est constituée par un ovoïde qui englobe l'ensemble des ancres de la cellule.

La Fig. 2D représente schématiquement un quatrième exemple de zone de couverture d'une cellule du réseau. Dans cet exemple, la cellule comprend une ancre coordinatrice A et trois ancres subordonnées $B_1$, $B_2$ et $B_3$.

Lorsque $\Delta > \delta$, la zone de couverture est encore une enveloppe convexe qui englobe l'ensemble des ancres de la cellule.

De manière générale, la condition (1) définit une poly-ellipse (dans un plan) ou un poly-ellipsoide (dans l'espace) possédant un nombre de foyers égal au nombre N d'ancres de la cellule.

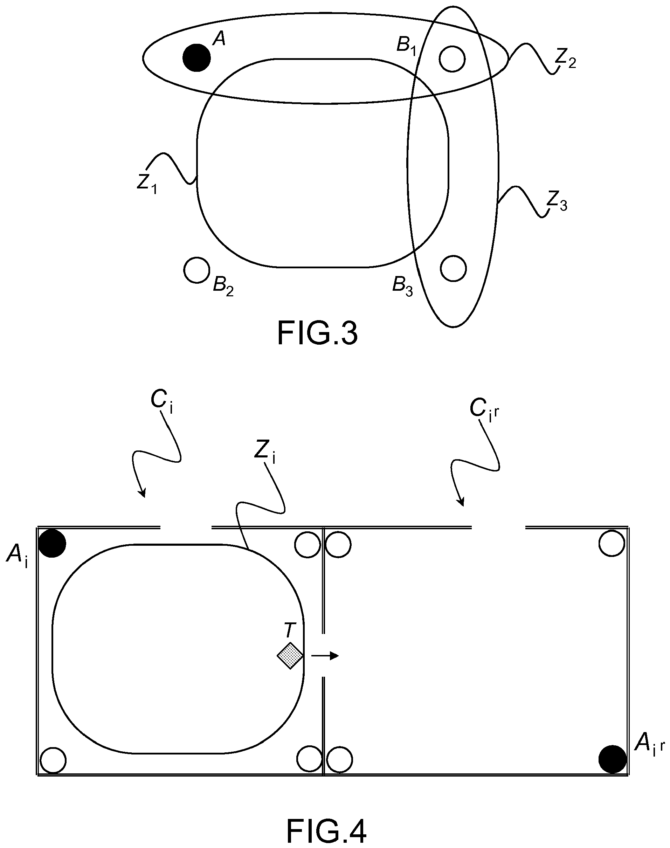

La Fig. 3 représente un exemple de cellule dont la zone de couverture Z est constituée de trois zones élémentaires. La cellule comprend une ancre coordinatrice A et trois ancres subordonnées $B_1$, $B_2$ et $B_3$. La première zone élémentaire $Z_1$ est associée aux quatre ancres $A, B_1, B_2, B_3$, la deuxième zone élémentaire $Z_2$ est associée aux ancres A et $B_1$ et la troisième zone élémentaire est associée aux ancres $B_1$ et $B_3$. Pour la zone élémentaire $Z_1$, on a choisi un seuil $\Delta < \delta$ (les ancres ne sont pas comprises dans la zone élémentaire) et pour les zones élémentaires $Z_2$, $Z_3$ on a choisi un seuil $\Delta > \delta$ (les ancres sont comprises dans les zones élémentaires qu'elles définissent).

La Fig. 4 illustre un exemple de situation de handover entre deux cellules adjacentes.

Les deux cellules correspondent à deux salles contiguës dans chacune desquelles ont été déployées une ancre coordinatrice et trois ancres subordonnées. Les deux cellules sont désignées par $C_i$ et $C_{i'}$. Pour simplifier, on a supposé ici que la zone de couverture de chaque cellule était constituée d'une seule zone élémentaire. On comprendra toutefois que la zone de couverture $Z_i$ de $C_i$ et/ou la zone de couverture $Z_{i'}$ de $C_{i'}$ peut être constituée de plusieurs zones de couverture élémentaires comme illustré dans l'exemple de la Fig. 3.

Comme déjà indiqué précédemment, une étiquette T peut se localiser (ou être localisée) par rapport à une cellule $C_i$. Pour ce faire, on détermine les distances entre l'étiquette T et les différentes ancres de chacune des zones élémentaires $Z_{ik}$ de la cellule $C_i$.

Dans le cas présent, l'étiquette T est supposée initialement dans la zone de couverture $Z_i$ de la cellule $C_i$ et se déplace vers la cellule $C_{i'}$.

Tant que l'étiquette T est dans la zone de couverture de la cellule $C_i$, l'étiquette continue à se synchroniser avec l'ancre coordinatrice $A_i$ et détermine sa position, par exemple au moyen des temps de propagation aller-retour (TWR) relatifs aux ancres $B_{i1}, B_{i2}, B_{i3}$. Alternativement, la position de l'étiquette peut être déterminée à partir des différences de ces temps de propagation (TDOA), le calcul de la position pouvant être effectué soit par l'ancre coordinatrice (recevant les instants de réception des ancres subordonnées) soit par un serveur distant. Dans le cas où la position de l'étiquette est déterminée par TDOA, l'ancre coordinatrice (ou le serveur distant) déduit de la position de l'étiquette, la somme des distances séparant l'étiquette des ancres de la cellule.

Connaissant le seuil, l'ancre coordinatrice (ou le serveur distant) peut en déduire si $D_{ik}$ est inférieure ou supé-

rieure à $\Delta_{ik}$. Elle avertit l'étiquette lorsqu'elle sort de la zone de couverture $Z_i$ (autrement dit de l'ensemble de zones de couverture élémentaires $Z_{ik}$).

Elle se met alors à l'écoute d'autres balises dans la partie dédiée (BOP) de la supertrame, ce pendant un nombre prédéterminé de supertrames successives.

Elle détecte alors le signal de balise possédant le niveau de puissance (RSSI) le plus élevé. On suppose que ce signal de balise est émis par l'ancre coordinatrice $A_{i'}$ d'une cellule adjacente $C_{i'}$. Si le signal de balise de $A_{i'}$ satisfait un critère de sélection, l'étiquette se synchronise avec l'ancre coordinatrice, $A_{i'}$ et se dissocie de l'ancre coordinatrice $A_i$ avec laquelle elle était associée.

Le critère de sélection est avantageusement un critère de niveau relatif de puissance. Autrement dit, si l'on note $\rho_i$ et $\rho_{i'}$ les niveaux de puissance (exprimés en dB) des signaux de balise des ancres coordinatrices $A_i$ et $A_{i'}$ reçus par l'étiquette $T$, le critère de sélection de $C_{i'}$ (c'est-à-dire de handover de $C_i$ vers $C_{i'}$) pourra s'exprimer sous la forme :

$$\rho_{i'} > \rho_i + \varepsilon_{ii'} \qquad (4)$$

où $\varepsilon_{ii'}$ est une valeur de seuil prédéterminée (positive, négative ou nulle). Selon un mode réalisation particulier, les valeurs de seuil $\varepsilon_{ii'}$ sont égales à une seule et même valeur $\varepsilon$. On comprendra qu'une valeur de seuil positive donne la préférence à la cellule courante dans laquelle se trouve l'étiquette alors qu'une valeur de seuil négative donne la préférence à la cellule de destination. Les valeurs de seuil $\varepsilon_{ii'}$ peuvent être choisies en fonction de la taille des cellules, des distances entre ancres coordinatrices, de l'atténuation due à l'environnement, des niveaux moyens d'interférence par exemple.

Quel que soit la variante choisie, l'homme du métier comprendra que la méthode de handover décrite ci-dessus est avantageuse dans la mesure où l'écoute des signaux de balise des cellules adjacentes n'est initiée que lorsque le critère de distance définissant la zone de couverture de la cellule courante n'est plus satisfait.

En outre, ladite méthode de handover n'entraine pas d'interruption de la communication de l'étiquette avec le réseau puisque la rupture de la liaison avec $A_i$ n'intervient que postérieurement à l'établissement de la liaison avec $A_{i'}$. En outre, le choix de la nouvelle cellule n'est plus arbitraire (détection de la première balise) mais est effectué selon un critère de niveau relatif de puissance des signaux de balise émis par les ancres coordinatrices.

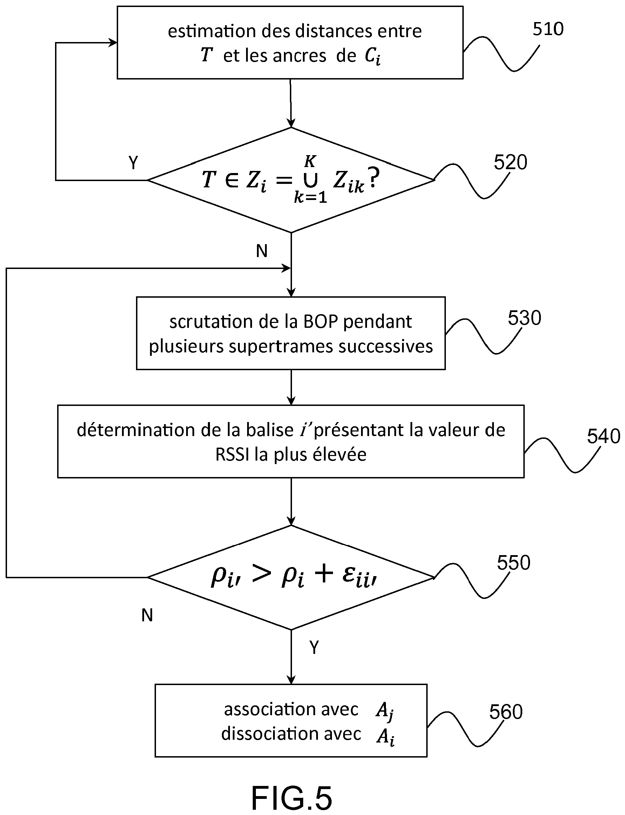

La Fig. 5 représente de manière schématique un ordinogramme de la méthode de handover selon un mode de réalisation de l'invention.

On suppose que l'étiquette se situe dans une cellule $C_i$ du réseau de capteurs sans fil.

La procédure de handover est initiée par une boucle de surveillance de la position de l'étiquette T, 510.

A l'étape 510, on estime les distances qui séparent l'étiquette T des ancres appartenant à l'ensemble $S_i$, c'est-à-dire des ancres de la cellule courante $C_i$.

Selon une première variante, ces distances peuvent être estimées par l'étiquette elle-même sur la base des temps de propagation aller-retour d'un message transmis par celle-ci et renvoyé par les ancres de la cellule $C_i$.

Selon une seconde variante, l'ancre coordinatrice $A_i$ de la cellule (ou un serveur distant) peut déterminer la position de l'étiquette sur la base des différences de temps d'arrivée d'un message émis par cette dernière et reçu par les ancres de la cellule. L'ancre coordinatrice en déduit les distances séparant l'étiquette des ancres de la cellule et calcule la somme de ces distances.

A l'étape 520, on détermine, à partir des distances ainsi obtenues, si l'étiquette T appartient à la couverture $Z_i$ de la cellule $C_i$. Pour ce faire, l'étiquette détermine si elle appartient à l'une des zones de couverture élémentaire $Z_{ik}$ de

la cellule $C_i$, au moyen de $D_{ik}(T) \leq \Delta_{ik}$ avec $D_{ik}(T) = \sum_{\ell=1}^{L_{ik}} \|TX_{ik\ell}\|$ où $X_{ik\ell}$ sont les ancres de la zone élémentaire $Z_{ik}$.

Ce test peut être effectué par l'étiquette elle-même (première variante) ou par l'ancre coordinatrice voire par un serveur distant (seconde variante).

Si $T \in Z_i = \bigcup_{k=1}^{K} Z_{ik}$ , elle retourne à l'étape 510.

La boucle peut avoir une fréquence d'itération relativement basse. Elle peut n'être activée par exemple qu'en cas d'une mise en mouvement de l'étiquette (le cas échéant détectée à l'aide d'un accéléromètre équipant l'étiquette). La fréquence d'itération peut en outre être choisie en fonction de la vitesse de l'étiquette.

Si l'étiquette T ne se trouve pas dans la zone de couverture $Z_i$, elle scrute en 530 l'intervalle dédié aux balises dans plusieurs supertrames consécutives.

Elle détermine en 540 la balise de plus forte puissance, c'est-à-dire présentant la valeur de RSSI la plus élevée sur un nombre prédéterminé de supertrames consécutives. Le signal est émis par l'ancre coordinatrice $A_i$, d'une cellule adjacente $C_{i'}$.

A l'étape 550, l'étiquette teste si le signal de balise reçu de $A_{i'}$ possède un niveau de puissance satisfaisant le critère de sélection (4). Pour ce faire, l'étiquette compare la puissance du signal de balise reçu de l'ancre coordinatrice $A_{i'}$ avec la puissance du signal de balise reçu de l'ancre coordinatrice $A_i$. Si le signal de puissance du signal de balise reçu de $A_{i'}$ satisfait au critère de sélection, on poursuit avec l'étape de handover 560. A défaut, on retourne à l'étape de scrutation 530.

Il convient de noter que les étapes 510 et 520 peuvent être exécutées en parallèle avec la boucle d'itérations des étapes 530-550.

A l'étape 560, l'étiquette $T$ s'associe à l'ancre coordinatrice $A_{i'}$ et se dissocie de l'ancre coordinatrice $A_i$. Autrement dit, une liaison avec l'ancre $A_{i'}$ est établie et la liaison avec l'ancre $A_i$ est rompue. Plus précisément, l'étiquette $T$ émet une requête d'association unicast à l'ancre coordinatrice $A_{i'}$ et, lorsqu'elle reçoit de cette dernière un message d'acquittement, elle rompt la liaison avec l'ancre $A_i$.

## Revendications

1. Méthode de handover pour une étiquette dans un réseau de capteurs sans fil ayant une structure cellulaire, chaque cellule du réseau comprenant une pluralité d'ancres dont une ancre coordinatrice et au moins une ancre subordonnée, les ancres subordonnées d'une cellule étant synchronisées avec l'ancre coordinatrice de cette cellule, l'étiquette étant en outre synchronisée avec une première ancre coordinatrice ($A_i$) d'une première cellule ($C_i$) au moyen d'un premier signal de balise, la méthode étant **caractérisée en ce que** :

   a) on détermine (510,520) à partir des distances qui la séparent des ancres de la première cellule si l'étiquette se situe dans une zone de couverture ($Z_i$) de cette première cellule et, dans la négative,
   b) l'étiquette scrute (530) les signaux de balise des cellules adjacentes à la première cellule et identifie (540) parmi eux un second signal de balise dont la puissance est la plus élevée, le second signal de balise étant émis par une seconde ancre coordinatrice ($A_{i'}$);
   c) l'étiquette teste (550) si la seconde cellule satisfait à un critère de sélection en comparant la puissance ($\rho_{i'}$) du second signal de balise avec la puissance ($\rho_i$) du premier signal de balise et, dans l'affirmative, s'associe avec la seconde balise et se dissocie de la première balise (560).

2. Méthode de handover selon la revendication 1, **caractérisée en ce que** la zone de couverture ($Z_i$) de la première cellule est constituée par un ensemble de zones de couverture élémentaires ($Z_{ik}$), chaque zone de couverture élémentaire étant associée à un sous-ensemble d'ancres ($\sigma_{ik}$) de la première cellule, l'étiquette se trouvant dans la zone de couverture de la première cellule si pour au moins une desdites zones élémentaires la somme ($D_{ik}$) des distances de l'étiquette aux ancres de cette zone élémentaire est inférieure à une valeur de seuil prédéterminée ($\Delta_{ik}$).

3. Méthode de handover selon la revendication 2, **caractérisée en ce que** les distances de l'étiquette aux ancres de la première cellule sont obtenues sur la base des temps de propagation aller-retour d'un message transmis par l'étiquette et renvoyé par les ancres de la première cellule, l'étiquette effectuant la somme des distances ainsi obtenues.

4. Méthode de handover selon la revendication 3, **caractérisée en ce que** ladite valeur de seuil prédéterminée est transmise par l'ancre coordinatrice à l'étiquette.

5. Méthode de handover selon la revendication 4, **caractérisée en ce que** ladite valeur de seuil prédéterminée est comprise dans le premier signal de balise.

6. Méthode de handover selon la revendication 2, **caractérisée en ce que** la position de l'étiquette est déterminée par l'ancre coordinatrice de la première cellule sur la base des différences de temps d'arrivée d'un message émis par l'étiquette et reçu par les ancres de la première cellule, l'ancre coordinatrice de la première cellule en déduisant la somme des distances séparant ladite étiquette des ancres de chaque zone élémentaire.

7. Méthode de handover selon la revendication 6, **caractérisée en ce que** l'ancre coordinatrice détermine si la somme des distances est supérieure à la valeur de seuil prédéterminée et, dans l'affirmative, en avertit l'étiquette.

8. Méthode de handover selon l'une des revendications précédentes, **caractérisée en ce que** l'accès au réseau est organisé sous forme de supertrames communes à l'ensemble du réseau, chaque supertrame contenant un intervalle réservé à la transmission de balises par les ancres coordinatrices, l'étiquette détecte à l'étape (b), au sein dudit intervalle, les signaux de balise de cellules adjacentes sur une pluralité de supertrames successives et détermine le second signal de balise de puissance la plus élevée en effectuant une moyenne sur ladite pluralité de supertrames successives.

9. Méthode de handover selon la revendication 8, **caractérisée en ce que** le critère de sélection à l'étape (c) s'exprime sous la forme $\rho_{i'} > \rho_i + \varepsilon_{ii'}$ où $\rho_i$ est la puissance du premier signal de balise, $\rho_{i'}$ est la puissance du second signal de balise et $\varepsilon_{ii'}$ est une valeur de seuil de puissance prédéterminée, positive, négative ou nulle.

10. Méthode de handover selon l'une des revendications précédentes, **caractérisée en ce que** le réseau est conforme au standard IEEE 802.15.4a.

**Patentansprüche**

1. Verfahren zur Übergabe für ein Etikett in einem drahtlosen Sensornetzwerk mit zellularer Struktur, wobei jede Zelle des Netzwerks eine Vielzahl von Ankern, einschließlich eines koordinierenden Ankers und mindestens eines untergeordneten Ankers, umfasst, wobei die untergeordneten Anker einer Zelle mit dem koordinierenden Anker dieser Zelle synchronisiert sind, wobei das Etikett ferner mit einem ersten koordinierenden Anker ($A_i$) einer ersten Zelle ($C_i$) mittels eines ersten Bakensignals synchronisiert ist, wobei das Verfahren **dadurch gekennzeichnet ist, dass**

   a) aus den Abständen, die es von den Ankern der ersten Zelle trennt, bestimmt wird (510, 520), ob sich das Etikett innerhalb eines Abdeckungsbereichs ($Z_i$) dieser ersten Zelle befindet und, falls nicht,
   b) das Etikett die Bakensignale der an die erste Zelle angrenzenden Zellen absucht (530) und aus diesen ein zweites Bakensignal identifiziert (540), dessen Leistung am höchsten ist, wobei das zweite Bakensignal von einem zweiten koordinierenden Anker ($A_i$) ausgegeben wird,
   c) das Etikett testet (550), ob die zweite Zelle ein Auswahlkriterium erfüllt, indem es die Leistung ($\rho_{i'}$) des zweiten Bakensignals mit der Leistung ($\rho_i$) des ersten Bakensignals vergleicht, und wenn dies der Fall ist, es sich mit dem zweiten Baken verbindet und sich von dem ersten Baken trennt (560).

2. Übergabeverfahren nach Anspruch 1, **dadurch gekennzeichnet, dass** der Abdeckungsbereich ($Z_i$) der ersten Zelle aus einer Menge elementarer Abdeckungsbereiche ($Z_{ik}$) besteht, wobei jeder elementare Abdeckungsbereich einer Untermenge von Ankern ($\sigma_{ik}$) der ersten Zelle zugeordnet ist, wobei sich das Etikett im Abdeckungsbereich der ersten Zelle befindet, wenn für mindestens einen der elementaren Bereiche die Summe ($D_{ik}$) der Abstände des Etiketts von den Ankern dieses elementaren Bereichs kleiner ist als ein vorbestimmter Schwellenwert ($\Delta_{ik}$).

3. Übergabeverfahren nach Anspruch 2, **dadurch gekennzeichnet, dass** die Abstände des Etiketts von den Ankern der ersten Zelle auf Basis der Round-Trip-Laufzeiten einer vom Etikett übertragenen und von den Ankern der ersten Zelle zurückgesendeten Nachricht erhalten werden, wobei das Etikett die so erhaltenen Abstände summiert.

4. Übergabeverfahren nach Anspruch 3, **dadurch gekennzeichnet, dass** der vorbestimmte Schwellenwert von dem koordinierenden Anker an das Etikett übertragen wird.

5. Übergabeverfahren nach Anspruch 4, **dadurch gekennzeichnet, dass** der vorbestimmte Schwellenwert im ersten Bakensignal enthalten ist.

6. Übergabeverfahren nach Anspruch 2, **dadurch gekennzeichnet, dass** die Position des Etiketts durch den koordinierenden Anker der ersten Zelle auf der Grundlage der Unterschiede in der Ankunftszeit einer von dem Etikett gesendeten und von den Ankern der ersten Zelle empfangenen Nachricht bestimmt wird, wobei der koordinierende Anker der ersten Zelle davon die Summe der Abstände abzieht, die das Etikett von den Ankern jedes elementaren Bereichs trennen.

7. Übergabeverfahren nach Anspruch 6, **dadurch gekennzeichnet, dass** der koordinierende Anker feststellt, ob die Summe der Abstände größer als der vorgegebene Schwellenwert ist, und, wenn dies der Fall ist, das Etikett benachrichtigt.

8. Übergabeverfahren nach einem der vorhergehenden Ansprüche, **dadurch gekennzeichnet, dass** der Zugang zum Netzwerk in Form von Superframes organisiert ist, die dem gesamten Netzwerk gemeinsam sind, wobei jeder Superframe ein Intervall enthält, das für die Übertragung von Baken durch die koordinierenden Anker reserviert ist, wobei das Etikett in Schritt (b) innerhalb des Intervalls die Bakensignale von benachbarten Zellen über eine Vielzahl von aufeinanderfolgenden Superframes erfasst und das zweite Bakensignal mit der höchsten Leistung durch Mittelung über die Vielzahl von aufeinanderfolgenden Superframes bestimmt.

9. Übergabeverfahren nach Anspruch 8, **dadurch gekennzeichnet, dass** sich das Auswahlkriterium in Schritt (c) als $\rho_{i'} > \rho_i + \varepsilon_{ii'}$ ausdrückt, wobei $\rho_i$ die Leistung des ersten Bakensignals ist, $\rho_{i'}$ die Leistung des zweiten Bakensignals ist und $\varepsilon_{ii'}$ ein vorbestimmter positiver, negativer oder Null-Leistungsschwellenwert ist.

10. Übergabeverfahren nach einem der vorhergehenden Ansprüche, **dadurch gekennzeichnet, dass** das Netz dem Standard IEEE 802.15.4a entspricht.

**Claims**

1. A handover method for a tag in a wireless sensor network having a cell structure, each cell of the network comprising a plurality of anchors including a coordinating anchor and at least one subordinate anchor, the subordinate anchors of a cell being synchronised with the coordinating anchor of this cell, the tag being further synchronised with a first coordinating anchor ($A_i$) of a first cell ($C_i$) by means of a first beacon signal, the method being **characterised by**:

   a) determining (510, 520), from distances separating anchors of the first cell, whether the tag is located in a coverage zone ($Z_i$) of this first cell and, if not,
   b) the tag tracking (530) the beacon signals of cells adjacent to the first cell and identifying (540) among them a second beacon signal the power of which is highest, the second beacon signal being transmitted by a second coordinating anchor ($A_{i'}$);
   c) the tag testing (550) whether the second cell meets a selection criterion by comparing power ($\rho_{i'}$) of the second beacon signal with power ($\rho_i$) of the first beacon signal and, if yes, associating with the second beacon and dissociating from the first beacon (560).

2. The handover method according to claim 1, **characterised in that** the coverage zone ($Z_i$) of the first cell consists of a set of unit coverage zones ($Z_{ik}$), each unit coverage zone being associated with a subset of anchors ($\sigma_{ik}$) of the first cell, the tag being located in the coverage zone of the first cell if for at least one of said unit zones, the sum ($D_{ik}$) of the distances from the tag to the anchors of this unit zone is lower than a predetermined threshold value ($\Delta_{ik}$).

3. The handover method according to claim 2, **characterised in that** the distances from the tag to the anchors of the first cell are obtained based on two way ranging propagation times of a message transmitted by the tag and sent back by the anchors of the first cell, the tag making the sum of distances thus obtained.

4. The handover method according to claim 3, **characterised in that** said predetermined threshold value is transmitted by the coordinating anchor to the tag.

5. The handover method according to claim 4, **characterised in that** said predetermined threshold value is included in the first beacon signal.

6. The handover method according to claim 2, **characterised in that** the position of the tag is determined by the coordinating anchor of the first cell based on time differences of arrival of a message transmitted by the tag and received by the anchors of the first cell, the coordinating anchor of the first cell by deducing the sum of the distances separating said tag from the anchors of each unit zone.

7. The handover method according to claim 6, **characterised in that** the coordinating anchor determines whether the sum of the distances is greater than the predetermined threshold value and, if yes, informs the tag about it.

8. The handover method according to one of the previous claims, **characterised in that** access to the network is organised as superframes common to the whole network, each superframe containing an interval reserved for transmitting beacons by the coordinating anchors, the tag detects in step (b), within said interval, beacon signals of adjacent cells on a plurality of successive superframes and determines the second beacon signal having the highest power by averaging said plurality of successive superframes.

9. The handover method according to claim 8, **characterised in that** the selection criterion in step (c) is expressed as $\rho_{i'} > \rho_i + \varepsilon_{ii'}$ where $\rho_i$, is the power of the first beacon signal, $\rho_{i'}$ is the power of the second beacon signal and $\varepsilon_{ii'}$ is a positive, negative or zero predetermined power threshold value.

10. The handover method according to one of the previous claims, **characterised in that** the network is in compliance with IEEE 802.15.4a standard.

FIG.1

FIG.2A

FIG.2B

FIG.2C

FIG.2D

FIG.3

FIG.4

estimation des distances entre
$T$ et les ancres de $C_i$ 510

Y $T \in Z_i = \bigcup_{k=1}^{K} Z_{ik}$ ? 520

N

scrutation de la BOP pendant
plusieurs supertrames successives 530

détermination de la balise $i'$ présentant la valeur de
RSSI la plus élevée 540

$\rho_{i'} > \rho_i + \varepsilon_{ii'}$ 550

N

Y

association avec $A_j$
dissociation avec $A_i$ 560

# FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Study of target tracking and handover in Mobile Wireless Sensor Network. **YAZDI EHSAN TABATABAEI.** conférence ICOIN2014. IEEE, 10 Février 2014